(19) Europäisches Patentamt European Patent Office Office européen des brevets

(11) **EP 4 206 167 A1**

(12) **EUROPEAN PATENT APPLICATION**

(43) Date of publication:
**05.07.2023 Bulletin 2023/27**

(21) Application number: **21218446.9**

(22) Date of filing: **31.12.2021**

(51) International Patent Classification (IPC):
**C05B 7/00** (2006.01)  **C05C 9/00** (2006.01)
**C05F 1/00** (2006.01)  **C05F 11/02** (2006.01)
**C05G 5/20** (2020.01)  **C05G 5/30** (2020.01)
**C05G 5/40** (2020.01)  **C05D 9/02** (2006.01)
**C05F 11/10** (2006.01)  **C05G 3/40** (2020.01)

(52) Cooperative Patent Classification (CPC):
(C-Sets available)
**C05B 7/00; A01N 25/28; C05C 9/005; C05F 1/005;
C05F 11/02; C05F 11/10; C05G 3/40; C05G 5/20;
C05G 5/37; C05G 5/40**                          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies, B.V.
4612 PX Bergen op Zoom (NL)**

(72) Inventors:
• **MARKANDAY, Meghna
Bangalore (IN)**

• **HEGDE, Ravi
Bangalore (IN)**
• **BELLA, Ridha
Riyadh (SA)**
• **ABDALLAH, Radwan
Riyadh (SA)**

(74) Representative: **Dehns
St. Bride's House
10 Salisbury Square
London EC4Y 8JD (GB)**

(54) **NANO BIO-CARRIER WITH MICRONUTRIENTS COATED ON CHEMICAL FERTILIZERS**

(57)   Disclosed herein are fertilizer compositions comprising a fertilizer composition comprising a nitrogen or phosphorus-based fertilizer; and a plant additive encapsulated by a polysaccharide polymer forming an encapsulated plant additive composite, wherein the encapsulated plant additive composite encapsulates the nitrogen or phosphorus-based fertilizer, wherein the plant additive comprises a bio-stimulant, a plant growth hormone, or a combination thereof. and

EP 4 206 167 A1

(52) Cooperative Patent Classification (CPC): (Cont.)

C-Sets
**A01N 25/28, A01N 37/10, A01N 43/38**

**Description**

**TECHNICAL FIELD**

The present disclosure relates to fertilizer compositions, more specifically to fertilizer compositions including a chemical fertilizer and a nutrient-enriched polysaccharide coating.

**BACKGROUND**

Plants or crops require certain essential nutrients to maintain health and foster growth. Nutrient levels outside the amount required for regular plant function may be a deficiency or toxicity and can result in a decline in plant health. Nutrient deficiency may refer to an inadequate amount of a given essential nutrient so that requirements of a growing plant are not met. Toxicity may occur when a given nutrient is in excess of a plant's needs, thereby decreasing plant growth or plant quality.

Modern agriculture relies heavily on chemical fertilizers to increase yield, particularly as more food is needed from the same amount of land. However, nutrients available in bulk chemical fertilizers may not be fully accessible to a plant. Moreover, the utilization of most of the macronutrients may be very low because of their inversion to insoluble form in soil. Generally, crops utilize less than half of the chemical fertilizers applied thereto. The remaining, unabsorbed minerals may leach into the soil and become fixed or contribute to air/soil pollution. There is a tremendous food production pressure on the sector as nutritional deficiencies in human populations are attributed to less nutritious food and a low dietary intake of fruits and vegetables. There remains a need in the art for a nutrient delivery system for plants that provides a slow or measured release to optimize plant absorption and utilization, while reducing negative environmental effects. Nanofertilizers may promote sustainable agriculture and increase crop productivity by increasing the nutrient use efficiency of the crops. These and other shortcomings are addressed by aspects of the present disclosure.

**BRIEF DESCRIPTION OF FIGURES**

The accompanying figures, which are incorporated in and constitute a part of this specification, illustrate several aspects and together with the description serve to explain the principles of the disclosure.

FIGS. 1A through 1C are transmission electron microscope TEM images at 0.2 $\mu$m and 100 nm of synthesized chitosan nanoparticles.

FIG. 2 is a Fourier transform infrared spectroscopy FTIR spectrum of synthesized chitosan nanoparticles.

**SUMMARY**

The present disclosure relates to a fertilizer composition comprising a nitrogen or phosphorus-based fertilizer; and a plant additive encapsulated by a polysaccharide polymer forming an encapsulated plant additive composite, wherein the encapsulated plant additive composite encapsulates the nitrogen or phosphorus-based fertilizer, and wherein the plant additive comprises a bio-stimulant, a plant growth hormone, or a combination thereof. The encapsulated plate additive composite that encapsulates or coats the nitrogen or phosphorus-based fertilizer may effect a prolonged release of the plant additive to a soil or foliar sample treated with the fertilizer composition.

Further aspects relate to methods of forming the fertilizer composition.

**DETAILED DESCRIPTION OF ILLUSTRATIVE EMBODIMENTS**

Macronutrients such as N, P, and K are needed by plants in large quantities. Chemical fertilizers are heavily employed to improve crop growth. Synthetic chemical fertilizers are used for the optimal growth and yield of crops, however conventional agricultural practices have not been successful to improve the nutrient uptake, nutrient use efficiency, and crop yield. Since most of these nutrients are not efficiently taken up by plants, farmers tend to apply high fertilizer doses leads to low nutrient use efficiency (NUE), which negatively impacts soil, water and productivity of the crops. Synthetic fertilizers generally also have a low nutrient use efficiency. More recently, nano fertilizers (NFs) have been adopted to promote sustainable agriculture and increase crop productivity by increasing the nutrient use efficiency of crops. NFs are configured to release nutrients at a slow and steady pace, when applied either alone or in combination with synthetic/ organic fertilizers. These fertilizers can release their nutrients in 40-50 days, while synthetic fertilizers may do the same in 4-10 days.

Aspects of the present disclosure incorporate nanofertilizers which are coated or encapsulated with a nanomaterial that controls the release of nutrients according to the plant requirements and results in an increase in the NUE of crops. As such, the disclosed fertilizer compositions may be more beneficial and efficient than synthetic or chemical fertilizers for crop growth and yield. Because of their small particle size, nanofertilizers may enter plants when applied as foliar or as soil additives. Nanofertilizers may be synthesized according to the nutrient requirements of a desired crop. In conventional plant nutrient management systems, it is very difficult to control the micronutrient delivery to a specific crop, but nanofertilizers provide the opportunity to tailor nutrient amounts. For instance, most of the horticultural growing areas worldwide are deficient in certain micronutrients (for example, Zn and Fe), so nanofertilizers may be effective and efficient fortification products for crop and fresh food products. Nanofertilizers increase the bioavailability of nutrients through their high specific surface area, miniature size and high reactivity. On the other hand, by providing balanced nutrition, nanofertilizers enable the plant to combat various biotic and abiotic stresses, with overall clear advantages.

The high surface area of NFs provide a maximum reactivity and increase both the availability of nutrients and NUE. Fertilizers are encapsulated in NPs to increase their uptake and availability to plants, as well as to decrease their bulk requirements.

The use of NFs can increase the NUE of fertilizers, enhance crop yield and quality and decrease the negative effects of synthetic fertilizers in the context of more sustainable agriculture. NFs precisely release nutrients in the root zone of plants by preventing rapid changes in the chemical composition of the nutrients in the soil, which, in turn, may reduce nutrient losses. Aspects of the present disclosure feature chitosan as a biopolymeric vehicle for the delivery of plant additives or active agents, such as micronutrients, growth hormones, and bio-stimulants. Another advantage for using nanofertilizers is that they can be synthesized according to the nutrient requirements of intended crops. In conventional nutrient management system, it is very difficult to control the micronutrient delivery to a specific crop, but nanofertilizers provide the opportunity to the growers for supplying adequate amounts of nutrients.

The disclosed fertilizer compositions exploit properties of nanofertilizers and regulate the availability of nutrients in crops through slow/control release mechanisms. Such a slow delivery of nutrients is associated with the covering or cementing of nutrients with nanomaterials. By taking advantage of this slow nutrient delivery, growers can increase their crop growth because of consistently long-term delivery of nutrients to plants. Without wishing to be bound by any particular theory, the particles may be suspended in nano-dimension and may generally not be visible to naked eye but exist as suspension in water. As such, the particles may be viewed as water soluble. These nanoparticles may be considered as a collection of nutrient ions which are slowly released over time from a nano-particle. In some aspect, as provided herein, nutrients may be released in a slower or more measured fashion compared to the release achieved using conventional fertilizers. Slow-release fertilizers are intended to release nutrients to plants or soil over a prolonged or extended period of time, which may be more efficient than multiple applications of conventional fertilizers.

A slow release (also called a controlled or prolonged release) may minimize the frequency with which plants should be treated with a nutrient or additive package, reducing or minimizing release. In some aspects, the disclosed fertilizer compositions may exhibit a plant additive concentration after 1 day, after 7 days, after 13 days, after 21 days, after 28 days, after 60 days, after 70 days, after 80 days that is at least 20%, 25%, 30%, 35%, 40%, 45%, 50%, 55%, 58%, 60%, 65%, 70%, 75%, 80%, 85%, 90%, 95%, or 98% of a plant nutrient concentration upon initial treatment of a soil or plant with the fertilizer composition.

Provided herein is fertilizer composition comprising a nanoscale biocarrier coating and a conventional nitrogen, phosphorous, or potassium-based fertilizer (such as urea). The nanoscale bio-carrier is equipped with desired plant additives or active agents configured to improve the overall nutrient or additive use efficiency. Nanoscale may refer to an average particle size less than 1000 nm, less than 800 nm, less than 750 nm, less than 700 nm, less than 650 nm, less than 600 nm, less than 550 nm, less than 500 nm) to maintain the disclosed properties of the fertilizer composition as a nanofertilizer. Nutrient or additive use efficiency may be defined as the ratio or measure of crop nutrient or additive use to the total input of nutrient or additive added to the given crop or plant. In various aspects, the bio-carrier is a naturally derived polysaccharide polymer chitosan, known to have benefits for soil and traditionally used for soil broadcasting in its bulk form.

The nitrogen, phosphorous, or potassium-based fertilizer may comprise urea, monoammonium phosphate, or diammonium phosphate or other suitable fertilizer. The disclosed fertilizer composition may comprise the nitrogen, phosphorous, or potassium-based fertilizer in an amount of about 50 wt. % to about 99.9 wt. % based on the total weight of the fertilizer composition. According to further aspects, the nanoscale bio-carrier which may be referred to as an encapsulating polysaccharide polymer is present in an amount of from about 0.01 wt. % to 5 wt. % based on the total weight of the fertilizer composition. The plant additive or active agent may be present in an amount of from about 0.01 wt. % to about 2 wt. % based on the total weight of the fertilizer composition.

In yet further aspects, the disclosed fertilizer composition is comprised of a granulated nitrogen-based fertilizer having the plant-additive enriched polysaccharide polymer coated thereupon. That is the composition may comprise the nitrogen-based fertilizer in a granule form having the combined encapsulating chitosan and plant additive (or active agent) coated on the granules. The plant additive may be encapsulated by the polysaccharide polymer, thereby forming an encapsulated plant additive composite. According to various aspects of the present disclosure, the encapsulated plant additive composite may be referred to or described as a nanocomposite or encapsulated plant additive nanocomposite. Nanoparticles of the encapsulated plant additive composite may be nanoscale, have an average size of from about 20 nm to about 500 nm.

In some aspects, the encapsulating chitosan and plant additive coating may be a coating with a thickness of about 1 micrometer ($\mu$m) to about 50 $\mu$m or from about 3 $\mu$m to about 20 $\mu$m on the surface of the fertilizer granules. The fertilizer granules may be typical, having an average size distribution of about 2 mm to about 4 mm and having a minimum purity of 90%, of 95%, of 98%, or of 99%.

Further provided herein are adducts of the fertilizer composition comprising the nitrogen-based fertilizer and encapsulating chitosan and plant additive coating. The adducts provided as-formed, may be provided in combination with one or more other components, such as a urease inhibitor or a fertilizer composition, for example, in the form of a nitrogen source including, but not limited to, a urea source. That is, the fertilizer composition may include one or more additives. These additives may include, but are not limited to, an additional fertilizer, a soil conditioner, a micronutrient, a secondary nutrient, or an organic additive. These further additives may comprise fulvic or humic acid, for example.

The fertilizer compositions of the present disclosure may be effective for a number of different plants or crops, according to their needs of nutrition. In certain aspects, the polymer composite coated or encapsulated urea may be useful in treating nitrogen rich crops. These nitrogen rich crops may include, but are not limited to, legumes, cereals or grains such as maize, wheat, barley, millet, or rice.

### Polysaccharide Polymer

Aspects of the present disclosure comprise a nitrogen or phosphorous-based fertilizer and a polysaccharide polymer. The nitrogen or phosphorous based fertilizer may comprise granules and the polysaccharide polymer may be an encapsulating coating thereupon. In certain aspects, the polysaccharide polymer may comprise chitosan nanoparticles. Chitosan may be described herein as an amino-modified polysaccharide. The polysaccharide polymer may comprise a plant additive deposited therein. Chitosan may thus act as a bio-carrier for the plant additive.

Chitosan is a natural polymer derived from deacetylation of chitin, which may be obtained from crustaceans, insects, fungi, among other sources (Boonsongrit *et al.*, 2006). A positive effect of chitosan has observed on seed germination, growth of seedlings, roots, shoots, photosynthesis, yield and nutrient uptake (Wanichpongpan *et al.*, 2001). Chitosan nanoparticles may be formed by a physical crosslinking reaction using tri-polyphosphate (TPP) and a comparable crosslinking agent. The resulting Chitosan nanoparticles may possess a porous structure that makes them unique in acting as a 'house' or 'template' or 'scaffold' for plant additive nanoparticles. The porous structure may ensure integrity of plant additive nanoparticles and their gradual release into the environment for plants to use them effectively. As such, the disclosed chitosan nanoparticles and nano-scale plant additive together comprise an encapsulated plant additive composite, or a chitosan nanocomposite. The chitosan nanocomposite may encapsulate or may be a coating on a nitrogen or phosphorus-based fertilizer such as urea. When applied as a soil treatment, the chitosan nanocomposite may effect a prolonged release of plant additive nanoparticles to the treated soil or leaves.

The polysaccharide polymer may be present in an amount of from about 0.01 wt. % to 2 wt. % based on the total weight of the fertilizer composition. The polysaccharide polymer encapsulating a suitable plant additive to form an encapsulated plant additive composite may be a coating on the fertilizer granules. The polysaccharide polymer itself may have a nano-scale dimension of from about 25 nanometers (nm) to about 800 nm or from about 25 nm to about 1000 nm. The coating comprising the encapsulating polysaccharide polymer and plant additive encapsulant may have a thickness of from about 1 $\mu$m to about 50 $\mu$m at a surface of the fertilizer granules. In yet further aspects, the coating may have a thickness of from about 3 $\mu$m to about 20 $\mu$m. Without wishing to be bound to any particular theory, as the polysaccharide polymer may function as a vehicle for delivery of the plant additive or active agent to a treated soil, the polysaccharide polymer may have a generally porous structure.

### Plant additive

The disclosed fertilizer composition may comprise an active agent or plant additive encapsulated in the disclosed chitosan biopolymeric vehicle. According to various aspects, a plant additive (or other active agent as described herein) may be encapsulated by a polysaccharide polymer forming an encapsulated plant additive composite. The encapsulated plant additive composite may be suitably applied as a coating to a granular urea fertilizer to provide the disclosed fertilizer composition. An active agent or plant additive may refer to a number of different nanoscale additives that may be introduced to a chitosan structure and combined with a fertilizer, such as urea, for delivery to plants. As an example, the active agent or plant additive as described herein may comprise a bio-stimulant, plant growth molecule, a micronutrient, or some combination thereof.

Bio-stimulants and/or plant growth hormones may stimulate nitrogen uptake and amino acid synthesis in plants. Plant bio-stimulants may typically fall within one of three categories: amino acid-containing products, hormone-containing products, and humic acid-containing products. Examples of plant bio-stimulants may include compositions based on seaweed extract, salicylic acid, bio-solids, humic acid, amino acids, hydrolyzed proteins, silicate, and/or synthetic compounds. According to aspects of the present disclosure, the bio-stimulant may comprise hormones such as gibberellins, which promote growth rates and increase plant size; cytokinins, which may promote plant cell division; and auxins, which may promote cell division and growth as well as stem elongation. Examples of growth hormones may further comprise indole-3-acetic acid (IAA), naphthalene acetic acid (NAA), indole butyric acid (IBA) or a combination thereof.

Generally, bio-stimulants may be produced by fermentation of microorganisms including but not limited to lactic acid bacteria and yeasts that are then killed or lysed. Suitable examples of bacteria may include, but are not limited to *Lactobacillus plantarum, Streptococcus thermophilus* (also called *Streptococcus salivarius*) and *Propionibacter freudenreichii.* Aspects further encompass various species of *Lactobaccillus, Streptococcus, and Propionibacter, Lactobacillus acidophilus, Lactobacillus buchneri, Lactobacillus johnsonii, Lactobacillus murinus, Lactobacillus paraplantarum, Lactobacillus pentosus, Lactobacillus delbrueckii, Lactococcus lactis, Leuconostoc oenos, Bifidobacter bifidus, Propionibacter shermani, Propionibacter pelophilus,* and *Propionivibrio limicola.* Useful examples of yeast may include, but are not limited to various species of *Saccharomyces,* such as *Saccharomyces pastorianus, Saccharomyces boulardii, Saccharomyces bayanus, Saccharomyces exiguous, Saccharomyces pombe,* as well as species of *Candida, Pichia, Hanseniaspora, Metschnikowia, Issatchenkia, Kluyverornyces,* and *Kloeckera.*

In further aspects, the plant additive or active agent may comprise a nano- micronutrient or macronutrient. Macronutrients may refer to essential elements such as nitrogen, phosphorus, potassium, and oxygen. Micronutrients may refer to trace minerals and may include iron, molybdenum, boron, copper, manganese, sodium, zinc, nickel, chlorine, selenium, vanadium and cobalt. Encapsulated micronutrients according to the present disclosure may comprise salts or oxides of magnesium, calcium silicon, zinc, boron, copper, titanium, or manganese, for example, in a bio-polymeric carrier and make them potentially safer for handling and usage for plants.

The plant additive or active agent may be present in an amount of from about 0.01 wt. % to about 2 wt. % based on the total weight of the fertilizer composition comprised of the chitosan vehicle with plant additive and the nitrogen or phosphorus-based fertilizer. Generally, the plant additive or active agent encapsulated by the polysaccharide polymer may be nanoscale having a size of from 20 nm to 500 nm.

**Properties/Advantages**

Aspects of the present disclosure overcome conventional challenges related to application of 100% bulk form of chemical fertilizers. The disclosed fertilizer composition utilizes encapsulation of active agents such as micronutrients or bio stimulants in a bio-polymeric nanoparticle, namely chitosan, as a vehicle for their delivery to plants. Usage of such a bio-polymeric nano-carrier provides further benefits including:

- Enhanced safety aspects by creating an environment friendly nano-formulation, which avoids direct exposure to consumer/end-user farmer to nanoparticles used in the formulation.

- Chitosan polymeric nanoparticles by the virtue of their enhanced porosity act as a physical template for various ingredients to reside on urea particles without agglomeration and also, enable their slow release over time.

The fertilizer compositions of the present disclosure may establish a sustained nutrient delivery system to ensure plant health. These compositions provide a useful mechanism for sustained delivery of plant additives or active agents to treated soil. As provided herein, the disclosed fertilizer compositions exploit nanofertilizers that provide a prolonged release of plant additives or bio-stimulants to a soil sample treated with the fertilizer composition.

ASPECTS

In various aspects, the present disclosure pertains to and includes at least the following aspects.

Aspect 1. A fertilizer composition comprising: a nitrogen or phosphorus-based fertilizer; and a plant additive encapsulated by a polysaccharide polymer forming an encapsulated plant additive composite, wherein the encapsulated plant additive composite encapsulates the nitrogen or phosphorus-based fertilizer, and wherein the plant additive comprises a bio-stimulant, a plant growth hormone, or a combination thereof.

Aspect 2. The fertilizer composition of aspect 1, wherein the nitrogen or phosphorus-based fertilizer comprises urea, monoammonium phosphate, or diammonium phosphate.

Aspect 3. The fertilizer composition of any one of claims 1-2, wherein the plant additive has an average particle size of from about 25 nanometers (nm) to 500 nm.

Aspect 4. The fertilizer composition of any one of aspects 1-3, wherein the plant additive comprises gibberellins, cytokinins, auxins, or a combination thereof.

Aspect 5. The fertilizer composition of any one of aspects 1-4, wherein the plant additive comprises one or more growth hormones selected from indole-3-acetic acid (IAA), naphthalene acetic acid (NAA), and indole butyric acid (IBA).

Aspect 6. The fertilizer composition of any one of aspects 1-5, wherein the polysaccharide polymer has a porous structure.

Aspect 7. The fertilizer composition of any one of aspects 1-6, wherein the polysaccharide polymer has a nano-scale dimension in a range of 25-800 nm.

Aspect 8. The fertilizer composition of any one of aspects 1-7, wherein the polysaccharide polymer comprises an amino-modified polysaccharide.

Aspect 9. The fertilizer composition of any one of aspects 1-7, wherein the polysaccharide polymer comprises chitosan.

Aspect 10. The fertilizer composition of any one of aspects 1-9, wherein the fertilizer composition comprises a nitrogen-based fertilizer comprising nitrogen-based granules, wherein the encapsulated plant additive composite is a coating on the nitrogen-based granules, and wherein the coating has a thickness of from about 1 micron ($\mu$m) to about 50 $\mu$m.

Aspect 11. The fertilizer composition of any one of aspects 1-9, wherein the fertilizer composition comprises nitrogen or phosphorous-based granules, wherein the encapsulated plant additive composite is a coating on the nitrogen or phosphorus-based granules, and wherein the coating has a thickness of from about 3 $\mu$m to about 20 $\mu$m.

Aspect 12. The fertilizer composition of any one of aspects 1-11, wherein the composition comprises a nitrogen-based fertilizer present in an amount of about 50 wt. % to about 99.9 wt. % based on the total weight of the fertilizer composition.

Aspect 13. The fertilizer composition of any one of aspects 1-12, wherein the polysaccharide polymer is present in an amount of from about 0.01 wt. % to 5 wt. % based on the total weight of the fertilizer composition.

Aspect 14. The fertilizer composition of any one of aspects 1-13, wherein the plant additive is present in an amount of from about 0.01 wt. % to about 2 wt. % based on the total weight of the fertilizer composition.

Aspect 15. The fertilizer composition of any one of aspects 1-14, wherein the fertilizer composition further comprises a binding agent, a stabilizer, a protectant, a dispersant, or a combination thereof.

Aspect 16. The fertilizer composition of any one of aspects 1-15, wherein the encapsulated plant additive composite as a coating effects a prolonged release of the plant additive to a soil or foliar sample treated with the fertilizer composition,

Aspect 17. A fertilizer composition comprising: from about 20 wt. % to about 99 wt. % of a urea fertilizer; and from about 0.01 wt. % to about 3 wt. % of a chitosan nanocomposite, wherein the chitosan nanocomposite encapsulates the urea fertilizer and wherein the chitosan nanocomposite further comprises a micronutrient, a macronutrient, or a combination thereof.

**EXAMPLES**

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt.%.

There are numerous variations and combinations of mixing conditions, e.g., component concentrations, volumes, temperatures, pressures and other mixing ranges and conditions that can be used to optimize the product purity and yield obtained from the described process. Only reasonable and routine experimentation will be required to optimize such process conditions.

*Synthesis of Chitosan Nanoparticles using ionotropic gelation method.* Low Molecular weight chitosan (0.1%) was dissolved in an aqueous solution of 1% (w/w) acetic acid and stirred overnight at room temperature using a magnetic stirrer. The solution pH was adjusted to 5.5 using 10 N aqueous NaOH. Tri-polyphosphate (TPP) was dissolved in deionized water at a concentration of 0.5 $\mu$g/mL and filtered through the syringe filter (pore size 0.45 $\mu$m, Millipore, USA). TPP solution was added dropwise to the Chitosan solution at different initial Chitosan to TPP ratios. The reaction was carried out for 10 min, followed by centrifugation at 10,000 rpm to remove residual TPP. Finally, the obtained pellet was re-suspended into deioniazed DI water and used as Chitosan NPs. Chitosan-biostimulant nanoparticles were synthesized by addition of a micronutrient solution during the cross-linking reaction of chitosan with TPP, sodium tri-polyphosphate (crosslinking agent).

Table 1 presents the preparation of chitosan nanoparticles by ion-gelation method.

**Table 1.** Chitosan nanoparticle preparation.

| | Chitosan grade (L, M, H) MW | Chitosan conc. (v/v) | TPP (v/v) | CS:TPP Molar ratio | Scale | NP formation |
|---|---|---|---|---|---|---|
| 1 | LMW | 0.1% | 1% | 1:1 | 25 mL | Yes |
| 2 | MMW | 0.1% | 1% | 1:1 | 25 mL | Yes |
| 3 | HMW | 0.1% | 1% | 1:1 | 25 mL | Yes |
| 4 | LMW (repeat of 1) | 0.1% | 1% | 1:1 | 500 mL | Yes |
| 5 | LMQ | 0.1% | 0.1% | 3:1 | 500 mL | Yes |

"L" refers to low molecular weight, namely a molecular MW of 50 to 190 kilodaltons KDa, greater than 75% deacetylated. "M" refers to medium MW of 190 to 310 kDa, greater than 75% deacetylated. "H" refers to high MW of 310000-375000 kDa, greater than 75% deacetylated.

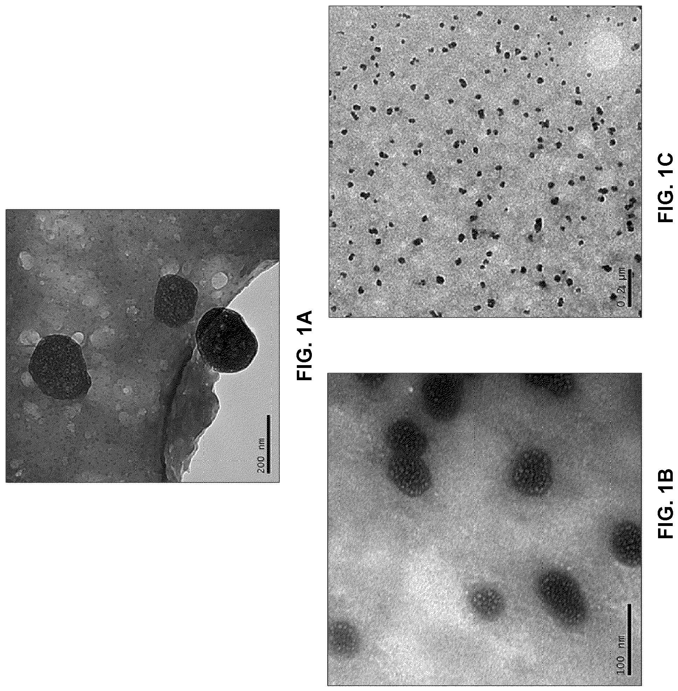

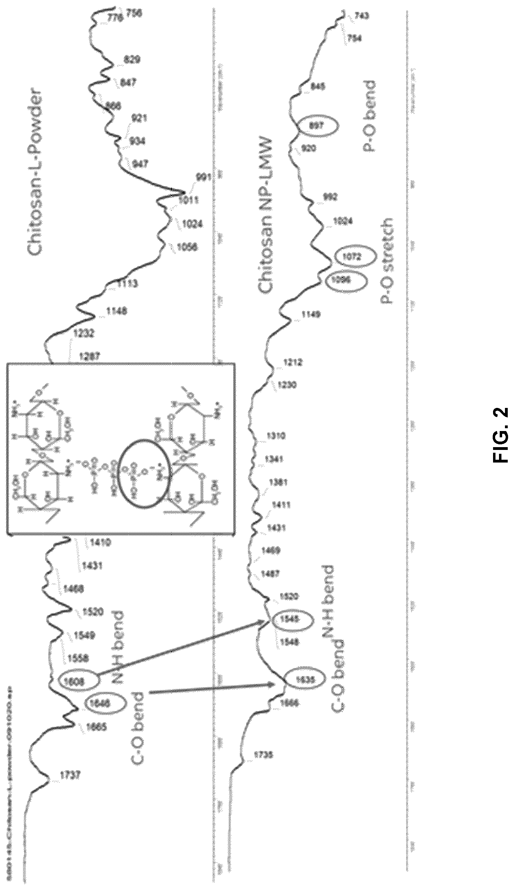

Chitosan nanoparticles synthesized were characterized by transmission electron microscope TEM (FIGS. 1A-1C) at 0.2 $\mu$m and 100 nm as well as Fourier-transform infrared spectroscopy FTIR (FIG. 2) which showed a size ranging between 50-200 nm with indication of porous structure. Qualitative confirmation of porosity for chitosan nanoparticles was determined from the TEM/SEM images where particles are assembled together into a sphere creating gaps/pores in the process.

The prepared chitosan nanoparticles were then coated on urea in the remainder of the examples provided herein.

*Spinach Trials to evaluate performance of encapsulated bio-stimulant).* A study was performed to evaluate the effect of the disclosed nanofertilizer (Chitosan) on nutrient uptake by spinach as well as to study the effect of Chitosan fertilizer in enhancing the growth and yield of spinach. Table 2 summarizes the parameters for the study.

**Table 2.** Parameters for spinach trials to determine prolonged release of bio-stimulant.

| | |
|---|---|
| **Crop Name** | Spinach (*Spinacia oleracea* L.) |
| **Season observed** | June-July |
| **Test item** | Nano fertilizer (Chitosan) |
| **Variety** | Arka Anupama |
| **No. of Treatments** | Seven (6+1) |
| **No. of Replications** | Five |
| **Total No. of Pots** | 35 |
| **Design** | Completely Randomized Design (CRD) |
| **Soil Type** | Sandy clay loam |
| **Recommended dose of fertilizer (RDF)** | 150:100:100 NPK kilograms per hectare (kg ha$^{-1}$) |

(continued)

| Crop Name | Spinach (*Spinacia oleracea* L.) |
|---|---|
| **Farm yard manure (FYM)** | 20 tonnes per hectare (t ha$^{-1}$) |
| **Soil pot$^{-1}$** | 15 kg pot$^{-1}$ |

Treatment details are summarized in Table 3.

**Table 3.** Parameters for soil or foliar treatment.

| No. | Treatments | Application rate | Application method |
|---|---|---|---|
| T$_1$ | Control | Urea: 326 Kg ha$^{-1}$ | Soil application |
| T$_2$ | UCH-1 0.15% CS (bulk) on urea | Coated Urea: 326 Kg ha$^{-1}$ Chitosan: 489 g ha$^{-1}$ | |
| T$_3$ | UCH-4 0.15% CS NP (Commercial grade) on urea | | |
| T$_4$ | UCH-6 0.15% CS NP + 0.2% ZnO NP on urea | Coated Urea: 326 Kg ha$^{-1}$ Zinc oxide: 652 g ha$^{-1}$ Chitosan: 489 g ha$^{-1}$ | |
| T$_5$ | UCH-10 0.15% CS NP (In house) on urea | Coated Urea: 326 Kg ha$^{-1}$ Chitosan: 489 g ha$^{-1}$ | |
| T$_6$ | UCH-F-10 100mg/L CS-bulk | 245 g ha$^{-1}$ in two split application (50 % of the soil application) • First foliar application at 20 DAS at 123 g ha$^{-1}$ | Foliar application |
| T$_7$ | UCH-F-12 100mg/L CS-NP (Commercial grade) | • Second foliar application at 10 days after first cut at 123 g ha$^{-1}$ | |

**Foliar Application:** Spray volume 500 L ha$^{-1}$

$$\text{Plant population ha}^{-1} = 10000/\text{ spacing}$$

$$10000/(0.2 \times 0.05) = 10,00,000 \text{ plants ha}^{-1}.$$

**Spray volume**

$$\text{Spray volume per plant} = 500/1000000 = 0.0005 \text{ liter (L)} = 50 \text{ milliliter (ml)}$$

**DAS:** Days after sowing

Chitosan was at 0.15 % (1.5 grams of chitosan for 1 kg of urea) with zinc oxide ZnO at 0.2 % (2 grams per 1 kg of urea).

Table 4 summaries the amount of fertilizer required.

Table 4. Fertilizer required for spinach trials.

| No. | Urea (g pot$^{-1}$) (3 split application) | | | SSP | MOP | Foliar application | |
|---|---|---|---|---|---|---|---|
| | Basal dose | Top dressing | | | | 1st foliar spray | 2nd foliar spray |
| | | 20 DAS | After 1st Cut | | | | |
| T$_1$ | 1.10 | 0.55 | 0.55 | 4.18 | 1.13 | - | |
| T$_2$ | 1.10 | 0.55 | 0.55 | 4.18 | 1.13 | | |
| T$_3$ | 1.10 | 0.55 | 0.55 | 4.18 | 1.13 | | |
| T$_4$ | 1.10 | 0.55 | 0.55 | 4.18 | 1.13 | | |

(continued)

| No. | Urea (g pot⁻¹) (3 split application) | | | SSP | MOP | Foliar application | |
| | Basal dose | Top dressing | | | | 1st foliar spray | 2nd foliar spray |
| | | 20 DAS | After 1st Cut | | | | |
|---|---|---|---|---|---|---|---|
| $T_5$ | 1.10 | 0.55 | 0.55 | 4.18 | 1.13 | | |
| $T_6$ | 1.10 | 0.55 | 0.55 | 4.18 | 1.13 | 0.123 g in 50 ml of water | 0.123 g in 50 ml of water |
| $T_7$ | 1.10 | 0.55 | 0.55 | 4.18 | 1.13 | 0.123 g in 50 ml of water | 0.123 g in 50 ml of water |
| Note: | RDF: 150:100: 100 kg ha⁻¹ of NPK (UAS Bengaluru Recommendation)<br>Urea: Two split application, Soil: 15 kg pot⁻¹<br>Irrigation: Soil moisture will be maintained at field capacity.<br>FYM: 20 t ha⁻¹ (Common for all the treatments) | | | | | | |

Table 5 presents the calendar of operation and observations recorded.

Table 5. Calendar and Plant Growth Observations for spinach trials

| No. | Trial Details | | Date | Remarks |
|---|---|---|---|---|
| Calendar of operation | | | | |
| 1 | Date of pot filling and irrigation | | Day 1 | Completed |
| 2 | Basal application and sowing | | Day 7 | Completed sowing |
| 3 | Days taken for 50% emergence | | | |
| 4 | Top dressing at 20 Days after sowing (DAS) | | | |
| 5 | Harvest | 1st cutting | | |
| | | 2st cutting | | |
| | | 3st cutting | | |
| Observations on growth, yield and nutrient parameters | | | | |
| 6 | Germination % | | At 10, 20, 30 DAS and at harvest | |
| 7 | Plant height (cm) | | | |
| 8 | Number of leaves plant⁻¹ | | | |
| 9 | Leaf area (cm² plant⁻¹) | | | |
| 10 | Chlorophyll content (SPAD reading) | | | |
| 11 | Dry matter production (g plant⁻¹) | | At harvest | |
| 12 | Leaf yield (g plant⁻¹) | | | |
| 13 | Post-harvest soil analysis | | pH and EC | |
| | | | Major nutrients (Kg ha⁻¹) | Available nitrogen, phosphorus, potassium |
| | | | Secondary nutrients | Exchangeable calcium & magnesium (mg / 100 g), Available sulfur (ppm), |
| | | | Micronutrients (ppm) | Boron, iron, zinc, copper, manganese |

(continued)

| No. | Trial Details | Date | | Remarks |
|---|---|---|---|---|
| 14 | Plant analysis | Major nutrients | | Nitrogen, phosphorus, potassium |
| | | Secondary elements | | Calcium, magnesium, sulfur, |
| | | Micronutrients | | Boron, iron, zinc, copper, manganese |
| 15 | Plant protection | One prophylactic spray at 15 DAS (Quinalphos 25% EC at 1 ml/liter and Carbendazim 50% WP at 2 g/liter) | | |
| 16 | Calculation of Efficiency parameters | After harvest of the crop | | |
| 17 | Statistical analysis | Data obtained in the experiment were subjected to variance analysis (specifically, analysis of variance ANOVA) | | |
| 18 | Compiled report | After statistical analysis | | |

Any publications mentioned herein are incorporated herein by reference to disclose and describe the methods and/or materials in connection with which the publications are cited.

It is also to be understood that the terminology used herein is for the purpose of describing particular aspects only and is not intended to be limiting. As used in the specification and in the claims, the term "comprising" may include the aspects or aspects "consisting of" and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "biostimulant" or a "micronutrient" includes mixtures of two or more such bio-stimulants or micronutrients.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit falling within a range between two particular units are also disclosed. For example, if 10 and 15 are disclosed, then 11, 12, 13, and 14 are also disclosed.

As used herein, the terms "optional" or "optionally" mean that the subsequently described event, condition, component, or circumstance may or may not occur, and that the description includes instances where said event or circumstance occurs and instances where it does not.

As used herein, "plant" may refer to refer to any part of a plant (e.g., roots, foliage, shoot) as well as trees, shrubbery, flowers, and grasses. "Seed' is intended to include seeds, tubers, tuber pieces, bulbs, etc., or parts thereof from which a plant is grown. As also used herein the term "water-insoluble' shall mean that less than 0.001% by weight of the compound is soluble in water.

As used herein, the term or phrase "effective," "effective amount," or "conditions effective to" refers to such amount or condition that is capable of performing the function or property for which an effective amount is expressed. As will be pointed out below, the exact amount or particular condition required may vary from one aspect or aspect to another, depending on recognized variables such as the materials employed and the processing conditions observed. Thus, it is not always possible to specify an exact "effective amount" or "condition effective to" for each aspect or aspect encompassed by the present disclosure. However, it should be understood that an appropriate effective amount or condition effective to achieve a desired results will be readily determined by one of ordinary skill in the art using only routine experimentation.

Disclosed are the components to be used to prepare disclosed compositions of the invention as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation cannot be explicitly disclosed, each is specifically contemplated and described herein. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular component in a composition or article, denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included. For example if a particular element or component in a composition or article is said to have 8% weight, it is understood that this percentage is relation to a total compositional percentage of 100%.

Each of the component starting materials disclosed herein are either commercially available and/or the methods for the production thereof are known to those of skill in the art.

It will be apparent to those skilled in the art that various modifications and variations can be made in the present disclosure without departing from the scope or spirit of the invention. Other aspects of the disclosure will be apparent to those skilled in the art from consideration of the specification and practice of the invention disclosed herein. It is intended that the specification and examples be considered as exemplary only, with a true scope and spirit of the invention being indicated by the following claims.

**Claims**

1. A fertilizer composition comprising:

   a nitrogen or phosphorus-based fertilizer; and
   a plant additive encapsulated by a polysaccharide polymer forming an encapsulated plant additive composite, wherein the encapsulated plant additive composite encapsulates the nitrogen or phosphorus-based fertilizer, and wherein the plant additive comprises a bio-stimulant, a plant growth hormone, or a combination thereof.

2. The fertilizer composition of claim 1, wherein the nitrogen or phosphorus-based fertilizer comprises urea, monoammonium phosphate, or diammonium phosphate.

3. The fertilizer composition of any one of claims 1-2, wherein the plant additive has an average particle size of from about 25 nanometers (nm) to 500 nm.

4. The fertilizer composition of any one of claims 1-3, wherein the plant additive comprises gibberellins, cytokinins, auxins, or a combination thereof.

5. The fertilizer composition of any one of claims 1-4, wherein the plant additive comprises one or more growth hormones selected from indole-3-acetic acid (IAA), naphthalene acetic acid (NAA), and indole butyric acid (IBA).

6. The fertilizer composition of any one of claims 1-5, wherein the polysaccharide polymer has a porous structure.

7. The fertilizer composition of any one of claims 1-6, wherein the polysaccharide polymer has a nano-scale dimension in a range of 25-800 nm.

8. The fertilizer composition of any one of claims 1-7, wherein the polysaccharide polymer comprises an amino-modified polysaccharide.

9. The fertilizer composition of any one of claims 1-7, wherein the polysaccharide polymer comprises chitosan.

10. The fertilizer composition of any one of claims 1-9, wherein the fertilizer composition comprises a nitrogen-based fertilizer comprising nitrogen-based granules, wherein the encapsulated plant additive composite is a coating on the nitrogen-based granules, and wherein the coating has a thickness of from about 1 micron ($\mu$m) to about 50 $\mu$m.

11. The fertilizer composition of any one of claims 1-9, wherein the fertilizer composition comprises nitrogen or phosphorous-based granules, wherein the encapsulated plant additive compositeis a coating on the nitrogen or phosphorus-based granules, and wherein the coating has a thickness of from about 3 $\mu$m to about 20 $\mu$m.

12. The fertilizer composition of any one of claims 1-11, wherein the composition comprises a nitrogen-based fertilizer present in an amount of about 50 wt. % to about 99.9 wt. % based on the total weight of the fertilizer composition.

13. The fertilizer composition of any one of claims 1-12, wherein the polysaccharide polymer is present in an amount of from about 0.01 wt. % to 5 wt. % based on the total weight of the fertilizer composition.

14. The fertilizer composition of any one of claims 1-13, wherein the plant additive is present in an amount of from about 0.01 wt. % to about 2 wt. % based on the total weight of the fertilizer composition.

15. The fertilizer composition of any one of claims 1-14, wherein the fertilizer composition further comprises a binding agent, a stabilizer, a protectant, a dispersant, or a combination thereof.

16. The fertilizer composition of any one of claims 1-15, wherein the encapsulated plant additive composite encapsulating the nitrogen or phosphorus based fertilizer effects a prolonged release of the plant additive to a soil or foliar sample treated with the fertilizer composition,

17. A fertilizer composition comprising:

from about 20 wt. % to about 99 wt. % of a urea fertilizer; and
from about 0.01 wt. % to about 3 wt. % of a chitosan nanocomposite, wherein the chitosan nanocomposite comprises a coating at the urea fertilizer and wherein the chitosan nanocomposite further comprises a bio-stimulant, a plant growth hormone, or a combination thereof.

FIG. 1A

FIG. 1B

FIG. 1C

**FIG. 2**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201854<br>Thomson Scientific, London, GB;<br>AN 2018-557650<br>XP002806824,<br>& CN 108 218 597 A (STANLEY FERTILIZER SUIPING CO LTD) 29 June 2018 (2018-06-29)<br>* abstract *<br>----- | 1-3,6,8,9,12-17 | INV.<br>C05B7/00<br>C05C9/00<br>C05F1/00<br>C05F11/02<br>C05G5/20<br>C05G5/30<br>C05G5/40<br>C05D9/02 |
| X | DATABASE WPI<br>Week 201925<br>Thomson Scientific, London, GB;<br>AN 2019-171108<br>XP002806825,<br>& CN 109 320 340 A (JIXI AGRIC BIOTECHNOLOGY CO LTD)<br>12 February 2019 (2019-02-12)<br>* abstract *<br>* examples *<br>----- | 1,3,6,9,10,13-16 | C05F11/10<br>C05G3/40 |
| X | DATABASE WPI<br>Week 201783<br>Thomson Scientific, London, GB;<br>AN 2017-768075<br>XP002806845,<br>& CN 107 311 778 A (STANLEY FERTILIZER FUYU CO LTD) 3 November 2017 (2017-11-03)<br>* abstract *<br>----- | 1 | **TECHNICAL FIELDS SEARCHED (IPC)**<br><br>C05B<br>C05C<br>C05F<br>C05G<br>C05D |
| X | DATABASE WPI<br>Week 201749<br>Thomson Scientific, London, GB;<br>AN 2017-397458<br>XP002806846,<br>& CN 106 748 125 A (WUHU WANMEI IND CO LTD) 31 May 2017 (2017-05-31)<br>* abstract *<br>-----<br>-/-- | 1 | |

The present search report has been drawn up for all claims

| Place of search | Date of completion of the search | Examiner |
|---|---|---|
| The Hague | 17 June 2022 | Rodriguez Fontao, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

Europäisches
Patentamt

European
Patent Office

Office européen
des brevets

# EUROPEAN SEARCH REPORT

**Application Number**

EP 21 21 8446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/153081 A1 (RYNAN TECH PTE LTD [SG]; NGUYEN MY T [VN] ET AL.) 15 August 2019 (2019-08-15) | 1,17 | |
| A | * abstract * <br> * paragraph [0140] * <br> * examples 19,20 * <br> * paragraph [0209] * <br> * claims * <br> ----- | 2-16 | |
| A | WO 2016/186526 A1 (BALLANCE AGRI-NUTRIENTS LTD [NZ]) 24 November 2016 (2016-11-24) * claims * <br> ----- | 1-17 | |
| A | DATABASE WPI <br> Week 202101 <br> Thomson Scientific, London, GB; <br> AN 2021-03151X <br> XP002806847, <br> & CN 112 136 826 A (UNIV HUBEI ENG) 29 December 2020 (2020-12-29) * abstract * <br> ----- | 1-17 | |
| A | DUHAN JOGINDER SINGH ET AL: "Nanotechnology: The new perspective in precision agriculture", BIOTECHNOLOGY REPORTS, vol. 15, 1 September 2017 (2017-09-01), pages 11-23, XP055931519, ISSN: 2215-017X, DOI: 10.1016/j.btre.2017.03.002 * abstract * <br> * page 14, left-hand column, paragraph 1 * <br> * page 14, right-hand column, paragraph 1 * <br> * tables 2,3 * <br> ----- <br> -/-- | 1-17 | |

**TECHNICAL FIELDS SEARCHED (IPC)**

The present search report has been drawn up for all claims

| Place of search | Date of completion of the search | Examiner |
|---|---|---|
| The Hague | 17 June 2022 | Rodriguez Fontao, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IFTIME MANUELA MARIA ET AL: "Designing chitosan based eco-friendly multifunctional soil conditioner systems with urea controlled release and water retention", CARBOHYDRATE POLYMERS, APPLIED SCIENCE PUBLISHERS , LTD BARKING, GB, vol. 223, 6 July 2019 (2019-07-06), XP085776309, ISSN: 0144-8617, DOI: 10.1016/J.CARBPOL.2019.115040 [retrieved on 2019-07-06] * abstract * | 1-17 | |
| A | DESHPANDE PARESH ET AL: "Zinc complexed chitosan/TPP nanoparticles: A promising micronutrient nanocarrier suited for foliar application", CARBOHYDRATE POLYMERS, APPLIED SCIENCE PUBLISHERS , LTD BARKING, GB, vol. 165, 20 February 2017 (2017-02-20), pages 394-401, XP029959576, ISSN: 0144-8617, DOI: 10.1016/J.CARBPOL.2017.02.061 * abstract * | 1-17 | **TECHNICAL FIELDS SEARCHED (IPC)** |
| A | BABU SUBHASH ET AL: "Nanofertilizers for agricultural and environmental sustainability", CHEMOSPHERE, PERGAMON PRESS, OXFORD, GB, vol. 292, 29 December 2021 (2021-12-29), XP086953553, ISSN: 0045-6535, DOI: 10.1016/J.CHEMOSPHERE.2021.133451 [retrieved on 2021-12-29] * abstract * | 1-17 | |

-/--

The present search report has been drawn up for all claims

| Place of search | Date of completion of the search | Examiner |
|---|---|---|
| The Hague | 17 June 2022 | Rodriguez Fontao, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 4

Europäisches
Patentamt

European
Patent Office

Office européen
des brevets

# EUROPEAN SEARCH REPORT

Application Number

EP 21 21 8446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI<br>Week 201719<br>Thomson Scientific, London, GB;<br>AN 2017-09364B<br>XP002806848,<br>& CN 106 342 448 A (XU J)<br>25 January 2017 (2017-01-25)<br>* abstract *<br>----- | 1-17 | |
| A | FAQIR YAHYA ET AL: "Chitosan in modern agriculture production",<br>PLANT, SOIL AND ENVIRONMENT,<br>vol. 67, no. No. 12,<br>10 December 2021 (2021-12-10), pages 679-699, XP055879314,<br>ISSN: 1214-1178, DOI:<br>10.17221/332/2021-PSE<br>Retrieved from the Internet:<br>URL:https://www.agriculturejournals.cz/pub licFiles/332_2021-PSE.pdf><br>----- | 1-17 | |
| T | PRAJAPATI DAMYANTI ET AL: "Chitosan nanomaterials: A prelim of next-generation fertilizers; existing and future prospects",<br>CARBOHYDRATE POLYMERS, APPLIED SCIENCE PUBLISHERS , LTD BARKING, GB,<br>vol. 288, 15 March 2022 (2022-03-15),<br>XP087023535,<br>ISSN: 0144-8617, DOI:<br>10.1016/J.CARBPOL.2022.119356<br>[retrieved on 2022-03-15]<br>----- | | **TECHNICAL FIELDS SEARCHED (IPC)** |

The present search report has been drawn up for all claims

| Place of search | Date of completion of the search | Examiner |
|---|---|---|
| The Hague | 17 June 2022 | Rodriguez Fontao, M |

EPO FORM 1503 03.82 (P04C01)

## ANNEX TO THE EUROPEAN SEARCH REPORT
## ON EUROPEAN PATENT APPLICATION NO.

EP 21 21 8446

17-06-2022

| Patent document cited in search report | | Publication date | Patent family member(s) | | Publication date |
|---|---|---|---|---|---|
| CN 108218597 | A | 29-06-2018 | NONE | | |
| CN 109320340 | A | 12-02-2019 | NONE | | |
| CN 107311778 | A | 03-11-2017 | NONE | | |
| CN 106748125 | A | 31-05-2017 | NONE | | |
| WO 2019153081 | A1 | 15-08-2019 | AU | 2019216889 A1 | 27-08-2020 |
| | | | BR | 112020015770 A2 | 08-12-2020 |
| | | | CA | 3088450 A1 | 15-08-2019 |
| | | | CN | 111868014 A | 30-10-2020 |
| | | | EP | 3749627 A1 | 16-12-2020 |
| | | | JP | 2021513500 A | 27-05-2021 |
| | | | KR | 20200121296 A | 23-10-2020 |
| | | | TW | 201940457 A | 16-10-2019 |
| | | | US | 2021363073 A1 | 25-11-2021 |
| | | | WO | 2019153081 A1 | 15-08-2019 |
| WO 2016186526 | A1 | 24-11-2016 | IE | 86855 B1 | 27-12-2017 |
| | | | WO | 2016186526 A1 | 24-11-2016 |
| CN 112136826 | A | 29-12-2020 | NONE | | |
| CN 106342448 | A | 25-01-2017 | NONE | | |

EPO FORM P0459